# EUROPEAN PATENT APPLICATION

(11) **EP 4 596 085 A1**
(43) Date of publication of application: **06.08.2025**
(21) Application number: 23872382.9
(22) Date of filing: 27.09.2023
(51) Int. Cl.: B01D 53/04, B01D 53/22, C01B 32/50

(54) **GAS RECOVERY SYSTEM**

(30) Priority: 27.09.2022 JP 2022154214
(71) Applicant: NITTO DENKO CORPORATION, Ibaraki-shi Osaka 567-8680 (JP)
(72) Inventor: KATAGIRI Makoto, Ibaraki-shi, Osaka 567-8680 (JP); SAIKI Keita, Ibaraki-shi, Osaka 567-8680 (JP); KONDO Rina, Ibaraki-shi, Osaka 567-8680 (JP); KOKUFU SHIROYANAGI Karin, Ibaraki-shi, Osaka 567-8680 (JP); FUKUMURA Takuya, Ibaraki-shi, Osaka 567-8680 (JP); IHARA Terukazu, Ibaraki-shi, Osaka 567-8680 (JP)
(74) Representative: Hoffmann Eitle
(86) International application number: PCT/JP2023/035058
(87) International publication number: WO 2024/071160

(57) **Abstract**

The present invention provides a novel gas recovery system suitable for reducing recovery power. A gas recovery system 100 includes: a gas separation device 10 that separates a gas mixture G containing a specific gas to obtain the separated gas Gs having a higher content of the specific gas than the gas mixture G; and a recovery portion 20 including an adsorbent 21, the adsorbent 21 being capable of adsorbing the specific gas contained in the separated gas Gs. The gas separation device 10 includes, for example, a separation membrane 11 that separates the gas mixture Gs. The adsorbent 21 includes, for example, a metal-organic framework.

## Description

### TECHNICAL FIELD

The present invention relates to a gas recovery system.

### BACKGROUND ART

In recent years, technologies for separating and recovering a specific gas such as carbon dioxide from gas mixtures have been attracting attention. For example, Patent Literature 1 proposes a technique in which exhaust gas from a boiler is separated using a membrane separation unit to separate CO₂ and SO₂ from the exhaust gas, followed by cooling using a cooling unit to condense the CO₂ and SO₂.

### CITATION LIST

### Patent Literature

Patent Literature 1: JP 2020-501884 A

### SUMMARY OF INVENTION

### Technical Problem

The system configuration of Patent Literature 1 requires a high recovery power for recovering high-concentration carbon dioxide.

The present invention aims to provide a novel gas recovery system suitable for reducing recovery power.

### Solution to Problem

The present invention provides a gas recovery system including:
a gas separation device that separates a gas mixture containing a specific gas to obtain a separated gas having a higher content of the specific gas than the gas mixture; and
a recovery portion including an adsorbent, the adsorbent being capable of adsorbing the specific gas contained in the separated gas.

### Advantageous Effects of Invention

The present invention can provide a novel gas recovery system suitable for reducing recovery power.

### BRIEF DESCRIPTION OF DRAWINGS

FIG. 1 is a schematic configuration diagram showing an example of a gas recovery system of a first embodiment.
FIG. 2 is a schematic cross-sectional view showing an example of a gas separation device included in the gas recovery system.
FIG. 3 is a schematic cross-sectional view showing an example of a separation membrane included in the gas separation device.
FIG. 4A is a schematic configuration diagram showing Modification 1 of the gas recovery system of the first embodiment.
FIG. 4B is a schematic configuration diagram showing Modification 2 of the gas recovery system of the first embodiment.
FIG. 4C is a schematic configuration diagram showing Modification 3 of the gas recovery system of the first embodiment.
FIG. 5 is a schematic configuration diagram showing an example of a gas recovery system of a second embodiment.
FIG. 6A is a schematic configuration diagram showing Modification 1 of the gas recovery system of the second embodiment.
FIG. 6B is a schematic configuration diagram showing Modification 2 of the gas recovery system of the second embodiment.
FIG. 6C is a schematic configuration diagram showing Modification 3 of the gas recovery system of the second embodiment.
FIG. 7 is a developed perspective view showing another example of the gas separation device included in the gas recovery system.
FIG. 8 is a schematic configuration diagram showing a gas recovery system used in Calculation Example 3.
FIG. 9 is a schematic configuration diagram showing a gas separation system used in Calculation Example 4.

### DESCRIPTION OF EMBODIMENTS

A gas recovery system according to a first aspect of the present invention includes:
a gas separation device that separates a gas mixture containing a specific gas to obtain a separated gas having a higher content of the specific gas than the gas mixture; and
a recovery portion including an adsorbent, the adsorbent being capable of adsorbing the specific gas contained in the separated gas.

In a second aspect of the present invention, for example, in the gas recovery system according to the first aspect, the specific gas is carbon dioxide.

In a third aspect of the present invention, for example, in the gas recovery system according to the first or second aspect, the gas separation device includes a separation membrane that separates the gas mixture.

In a fourth aspect of the present invention, for example, in the gas recovery system according to any one of the first to third aspects, the adsorbent includes a metal-organic framework.

In a fifth aspect of the present invention, for example, in the gas recovery system according to the fourth aspect, the metal-organic framework includes, as a core, a metal ion, a metal cluster, or a metal oxide cluster, and includes a tetradentate organic ligand.

In a sixth aspect of the present invention, for example, in the gas recovery system according to the fifth aspect, the organic ligand includes a tetracarboxylic acid.

In a seventh aspect of the present invention, for example, in the gas recovery system according to the sixth aspect, the tetracarboxylic acid includes a nitrogen atom.

In an eighth aspect of the present invention, for example, in the gas recovery system according to any one of the fourth to sixth aspects, the metal-organic framework has an nbo structure.

In a ninth aspect of the present invention, for example, in the gas recovery system according to any one of the fourth to seventh aspects, an amount of adsorption of the specific gas on the metal-organic framework in a pressure range of 0.1 MPa to less than 1.1 MPa is greater than an amount of adsorption of the specific gas on the metal-organic framework in a pressure range of 0 MPa to less than 0.1 MPa.

In a tenth aspect of the present invention, for example, in the gas recovery system according to any one of the first to the ninth aspects, the content of the specific gas in the separated gas is 95 vol% or less.

In an eleventh aspect of the present invention, for example, in the gas recovery system according to the tenth aspect, the content of the specific gas in the separated gas is 70 vol% or more.

In a twelfth aspect of the present invention, for example, the gas recovery system according to any one of the first to the eleventh aspects further includes a pressurization device that pressurizes the separated gas.

In a thirteenth aspect of the present invention, for example, in the gas recovery system according to any one of the first to the twelfth aspects, when an adsorption operation is performed in which the specific gas contained in the separated gas is adsorbed onto the adsorbent, and then a desorption operation is performed in which an adsorbed gas containing the specific gas is desorbed from the adsorbent, a content of the specific gas in the adsorbed gas is higher than the content of the specific gas in the separated gas.

In a fourteenth aspect of the present invention, for example, in the gas recovery system according to the thirteenth aspect, the recovery portion further includes a container, a gas introduction port, and a gas discharge port, and during the adsorption operation, a non-adsorbed gas is discharged through the gas discharge port.

In a fifteenth aspect of the present invention, for example, the gas recovery system according to the fourteenth aspect further includes a non-adsorbed gas circulation passage for feeding at least a portion of the non-adsorbed gas to the recovery portion or the gas separation device.

In a sixteenth aspect of the present invention, for example, the gas recovery system according to the fourteenth or fifteenth aspect includes a plurality of the recovery portions connected in series, wherein
during the desorption operation, the adsorbed gas discharged through the gas discharge port of the upstream recovery portion is supplied through the gas introduction port of the downstream recovery portion.

In a seventeenth aspect of the present invention, for example, the gas recovery system according to any one of the first to the sixteenth aspects further includes a combustion device that is supplied with a fuel gas containing oxygen and that discharges the gas mixture.

In an eighteenth aspect of the present invention, for example, in the gas recovery system according to the seventeenth aspect, the combustion device includes a boiler.

A gas recovery system according to a nineteenth aspect of the present invention includes:
a gas separation device that separates a gas mixture containing carbon dioxide to obtain a separated gas having a higher content of carbon dioxide than the gas mixture; and
a recovery portion including an adsorbent, the adsorbent being capable of adsorbing the carbon dioxide contained in the separated gas.

The present invention is described in detail below. The following description is not intended to limit the present invention to a specific embodiment.

### <Embodiments of Gas Recovery System>

A gas recovery system of the present embodiment includes a gas separation device and a recovery portion. The gas separation device is a device that separates a gas mixture G containing a specific gas to obtain a separated gas Gs having a higher content of the specific gas than the gas mixture G. The recovery portion includes an adsorbent. The adsorbent adsorbs the specific gas contained in the separated gas Gs.

The specific gas contains, for example, an acid gas. Examples of acid gases include carbon dioxide, hydrogen sulfide, carbonyl sulfide, sulfur oxides (SOx), hydrogen cyanide, and nitrogen oxides (NOx), preferably carbon dioxide. In the case where the specific gas is an acid gas, the gas mixture contains a gas different from the acid gas. Examples of the different gas include hydrogen, nitrogen, oxygen, methane, helium, argon, propane, and propylene, preferably nitrogen, methane, and the like. In particular, the gas recovery system of the present embodiment is suitable for applications of recovering carbon dioxide from a gas mixture containing carbon dioxide and nitrogen. The specific gas may be any of the gases described above as the different gas.

The gas separation device may be any device that can separate the gas mixture G to obtain the separated gas Gs having a higher content of the specific gas than the gas mixture G. For example, the gas separation device may employ a membrane separation method that uses a separation membrane to separate the gas mixture G thus to obtain the separated gas Gs, or may employ a physical adsorption method that uses an adsorbent to separate the gas mixture G thus to obtain the separated gas Gs. Examples of physical adsorption methods include the pressure swing adsorption (PSA) method, the temperature swing adsorption (TSA) method, and the pressure and temperature swing adsorption (PTSA) method. The PSA method, the TSA method, and the PTSA method are methods in which gas is separated using an adsorbent that is composed of a chemical adsorption component such as potassium carbonate or an amine carried on a carrier such as activated carbon or a porous resin. The PSA method performs gas separation by utilizing differences in the adsorption ability of the adsorbent caused by pressure changes. The TSA method performs gas separation by utilizing differences in the adsorption ability of the adsorbent caused by temperature changes. The PTSA method performs gas separation by utilizing differences in the adsorption ability of the adsorbent caused by pressure changes and temperature changes. In the case where the gas separation device employs a physical adsorption method, the gas separation device may employ the PSA method.

In the case where the gas separation device employs a membrane separation method, the gas separation device may include a separation membrane that separates the gas mixture G. The separation membrane can separate the gas mixture G, thereby obtaining the separated gas Gs.

The separation membrane included in the gas separation device can be rephrased as a separation membrane that separates the gas mixture G into a permeated gas S₁ and a non-permeated gas S₂. The permeated gas S₁ may be the separated gas Gs or the non-permeated gas S₂ may be the separated gas Gs.

Well-known conventional systems for separating and recovering a specific gas from a gas mixture include a system in which, for example, a specific gas such as carbon dioxide is separated from a gas mixture such as exhaust gas by chemical absorption, the separated specific gas is condensed and liquefied, and then recovered. However, liquefaction of a specific gas such as carbon dioxide requires large-scale equipment. The present inventors have extensively studied a more compact system for recovering a separated specific gas, and consequently have devised a novel gas recovery system that combines a gas separation device with a recovery portion including an adsorbent. According to the gas recovery system of the present embodiment, a specific gas contained in the separated gas Gs, which has been separated by the gas separation device, can be recovered by adsorption onto the adsorbent in the recovery portion, thereby reducing the recovery power for the specific gas. Furthermore, since an adsorbent is used for recovering the specific gas, the recovery portion can have a compact configuration. In the present specification, the term "recovery power for a specific gas" means the total power required to recover the specific gas. The recovery power of the gas recovery system for a specific gas includes the separation power of the gas separation device per unit amount of the specific gas to be recovered.

The content of the specific gas in the separated gas Gs is preferably 95 vol% or less. In the case where the content of the specific gas in the separated gas Gs is 95 vol% or less, it is possible to suppress an excessive increase in the separation power of the gas separation device. In the present specification, the content (vol%) of the specific gas in the separated gas Gs is the volume ratio of the specific gas to the separated gas Gs under standard conditions (0°C and 101.33 kPa).

The content of the specific gas in the separated gas Gs is preferably 70 vol% or more. In the case where the content of the specific gas in the separated gas Gs is 70 vol% or more, a higher concentration of the specific gas can be recovered by a gas recovery system 100.

The lower limit for the content of the specific gas in the separated gas Gs may be 80 vol% or 85 vol%.

As a first embodiment, the gas recovery system 100 is described below, in which the specific gas is carbon dioxide, a gas separation device 10 includes a separation membrane 11, and the separated gas Gs is a permeated gas S₁. As a second embodiment, a gas recovery system 110 is described below, in which the specific gas is carbon dioxide, the gas separation device 10 includes the separation membrane 11, and the separated gas Gs is the non-permeated gas S₂.

### <First Embodiment>

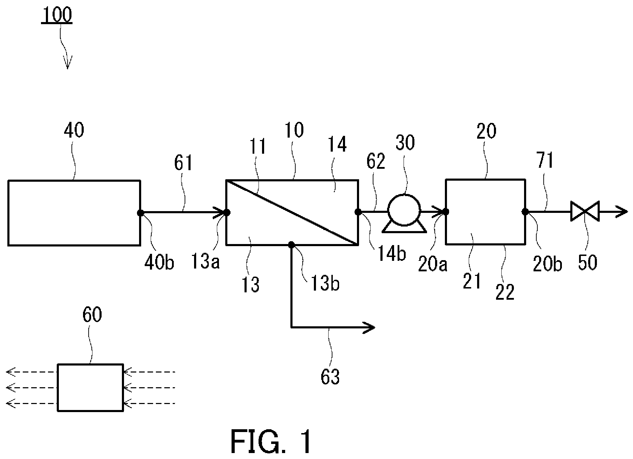

FIG. 1 is a schematic configuration diagram showing an example of the gas recovery system 100 of the first embodiment. The gas recovery system 100 includes the gas separation device 10 and a recovery portion 20. The gas separation device 10 includes the separation membrane 11. The separation membrane 11 separates the gas mixture G containing carbon dioxide into the permeated gas S₁ and the non-permeated gas S₂. In the first embodiment, the permeated gas S₁ has a higher carbon dioxide content than the gas mixture G. That is, in the first embodiment, the permeated gas S₁ is the separated gas Gs. The recovery portion 20 includes an adsorbent 21. The adsorbent 21 adsorbs carbon dioxide contained in the separated gas Gs.

### [Gas Separation Device]

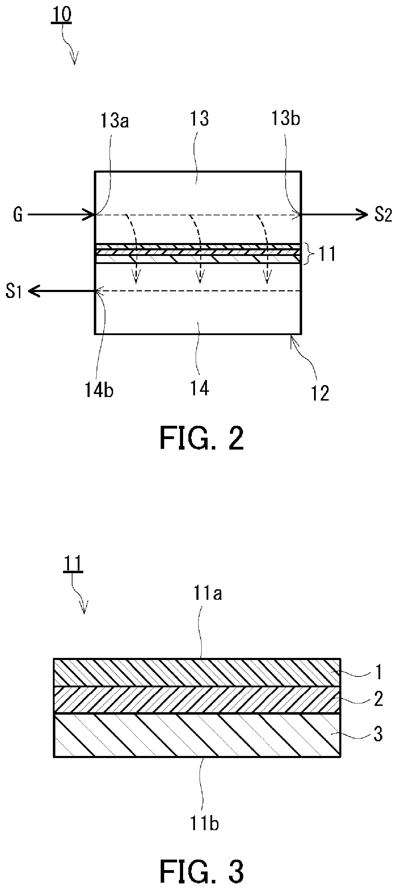

FIG. 2 is a schematic cross-sectional view showing an example of the gas separation device 10 included in the gas recovery system 100. In the example in FIG. 2, the gas separation device 10 includes the separation membrane 11 that separates the gas mixture G supplied. The separated gas Gs obtained using the separation membrane 11 (permeated gas S₁) has a higher content of carbon dioxide than the gas mixture G.

As shown in FIG. 2, the gas separation device 10 includes the separation membrane 11 and a container 12. The container 12 has a first chamber 13 and a second chamber 14. The first chamber 13 functions as a supply space to which the gas mixture G is supplied. The second chamber 14 functions as a permeation space to which the permeated gas S₁ is supplied. The permeated gas S₁ is obtained by the permeation of the gas mixture G through the separation membrane 11.

The separation membrane 11 is disposed inside the container 12. Inside the container 12, the separation membrane 11 separates the first chamber 13 and the second chamber 14 from each other. The separation membrane 11 extends from one of a pair of wall surfaces of the container 12 to the other.

The first chamber 13 has a supply space inlet 13a and a supply space outlet 13b. The second chamber 14 has a permeation space outlet 14b. The supply space inlet 13a is an opening for supplying the gas mixture G to the supply space (first chamber 13). The permeation space outlet 14b is an opening for discharging the permeated gas S₁ from the permeation space (second chamber 14). The supply space outlet 13b is an opening for discharging, from the supply space (first chamber 13), the gas mixture G that has not permeated through the separation membrane 11 (non-permeated gas S₂). The supply space inlet 13a, the supply space outlet 13b, and the permeation space outlet 14b are each formed, for example, in a wall surface of the container 12.

The gas separation device 10 may employ the operation method that generates a pressure difference by decompression from the permeation space side (decompression method) or the operation method that performs pressurization by control of the supply pressure from the non-permeation space side (pressurization method). The gas separation device 10 may employ the sweep gas method that generates a pressure difference by supply of an inert gas, dry air, and the like to the permeation space side. In the case where the content of carbon dioxide in the gas mixture G to be supplied is low (e.g., 10 vol% or less), employing the decompression method can suppress an excessive increase in the separation power of the gas separation device 10.

The content of carbon dioxide in the gas mixture G is not particularly limited. The content of carbon dioxide in the gas mixture G is, for example, 1 to 70 vol%.

The gas separation device 10 is suitable for a flow-type (continuous-type) membrane separation method. However, the gas separation device 10 may be used for a batch-type membrane separation method.

The configuration of the separation membrane 11 is not particularly limited. FIG. 3 is a schematic cross-sectional view showing an example of the separation membrane 11 included in the gas separation device 10 shown in FIG. 2. As shown in FIG. 3, the separation membrane 11 may include a separation functional layer 1, a porous support member 3 supporting the separation functional layer 1, and an intermediate layer 2 disposed between the separation functional layer 1 and the porous support member 3. The intermediate layer 2, for example, is in direct contact with each of the separation functional layer 1 and the porous support member 3.

In the first embodiment, the separation membrane 11 is a membrane permeable preferentially to carbon dioxide contained in the gas mixture G (carbon dioxide separation membrane). In this case, the content of carbon dioxide in the permeated gas S₁ is higher than the content of carbon dioxide in the gas mixture G. On the other hand, the content of carbon dioxide in the non-permeated gas S₂ is lower than the content of carbon dioxide in the gas mixture G. That is, in the case where the separation membrane 11 is a carbon dioxide separation membrane, the permeated gas S₁ corresponds to the separated gas Gs.

### (Separation Functional Layer)

In the first embodiment, the separation functional layer 1 is a layer permeable preferentially to carbon dioxide contained in the gas mixture G. The separation functional layer 1 preferably contains a resin. Examples of the resin contained in the separation functional layer 1 include a polyether block amide resin, a polyamide resin, a polyether resin, a polyimide resin, a polyetherimide resin, a cellulose acetate resin, a silicone resin, and a fluororesin. The separation functional layer 1 preferably contains a polyimide resin or a cellulose acetate resin, and more preferably contains a cellulose acetate resin. The separation functional layer 1 preferably consists substantially of a resin. In the present specification, the phrase "consist substantially of" means the exclusion of other components that alter the essential characteristics of the material referred to, and means, for example, that 95 wt% or more or even 99 wt% or more is composed of the material.

The thickness of the separation functional layer 1 is, for example, 50 µm or less, preferably 25 µm or less, and more preferably 15 µm or less. The thickness of the separation functional layer 1 may be 0.05 µm or more or 0.1 µm or more.

### (Intermediate Layer)

The intermediate layer 2 contains, for example, a resin and may further contain nanoparticles dispersed in the resin (matrix). The nanoparticles may be separated from each other or partially aggregate in the matrix. The material of the matrix is not particularly limited, and examples thereof include: a silicone resin such as polydimethylsiloxane; a fluororesin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably contains a silicone resin.

The nanoparticles may contain an inorganic material or an organic material. The inorganic material contained in the nanoparticles is, for example, silica, titania, or alumina. The nanoparticles preferably contain silica.

The thickness of the intermediate layer 2 is not particularly limited and is, for example, less than 50 µm, preferably 40 µm or less, and more preferably 30 µm or less. The lower limit for the thickness of the intermediate layer 2 is not particularly limited and is, for example, 1 µm. The intermediate layer 2 is, for example, a layer having a thickness of less than 50 µm.

### (Porous Support Member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer containing at least one selected from the group consisting of polyvinyl fluoride, polyvinylidene fluoride, polyurethane, polypropylene, polyethylene, polystyrene, polycarbonate, polysulfone, polyetheretherketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of, for example, 0.01 to 0.4 µm. The thickness of the porous support member 3 is not particularly limited and is, for example, 10 µm or more, preferably 20 µm or more, and more preferably 50 µm or more. The thickness of the porous support member 3 is, for example, 300 µm or less, preferably 200 µm or less, and more preferably 150 µm or less.

The configuration of the separation membrane 11 is not limited to the example shown in FIG. 3. The separation membrane 11 may be composed of, for example, the separation functional layer 1 and the porous support member 3 disposed on one surface side of the separation functional layer 1 to support the separation functional layer 1. The separation membrane 11 may be composed of, for example, the separation functional layer 1, a protective layer disposed on one surface side of the separation functional layer 1 to protect the separation functional layer 1, and the porous support member 3 disposed on the other surface side of the separation functional layer 1 to support the separation functional layer 1. The protective layer can be a layer containing any of the materials described for the intermediate layer 2.

### [Recovery Portion]

The recovery portion 20 includes the adsorbent 21 that adsorbs carbon dioxide contained in the supplied separated gas Gs (permeated gas S₁). The recovery portion 20 includes the adsorbent 21 and a container 22. The adsorbent 21 is disposed inside the container 22.

The operation of the recovery portion 20 in which the separated gas Gs is brought into contact with the adsorbent 21 to adsorb carbon dioxide contained in the separated gas Gs onto the adsorbent 21 is hereinafter referred to as an adsorption operation. The operation of the recovery portion 20 in which an adsorbed gas Ga containing carbon dioxide is desorbed from the adsorbent 21, onto which carbon dioxide has been adsorbed, is hereinafter referred to as a desorption operation.

The pressure in the recovery portion 20 during the adsorption operation is, for example, less than 1.1 MPa and may be 1.0 MPa or less or 0.9 MPa or less. The pressure in the recovery portion 20 during the adsorption operation is preferably equal to atmospheric pressure (e.g., 0.1 MPa) or more, is, for example, 0.1 MPa or more, and may be 0.2 MPa or more. The pressure in the recovery portion 20 during the adsorption operation may be 0.1 MPa or more and less than 1.1 MPa. The pressure in the recovery portion 20 may be reduced during the desorption operation. That is, in the desorption operation, the pressure in the recovery portion 20 may be reduced to desorb the adsorbed gas Ga from the adsorbent 21. In the desorption operation, the pressure in the recovery portion 20 may be reduced to atmospheric pressure. According to the gas recovery system 100, a specific gas can be adsorbed and desorbed in a range of 0.1 MPa to less than 1.1 MPa. Consequently, the desorption operation can be performed without using a vacuum pump, and in addition, the use of a high-pressure tank as the container 22 of the recovery portion 20 is not required. The High Pressure Gas Safety Act is not applicable in cases where a high-pressure tank is not used, thereby facilitating the handling of the container 22 and the operation of the recovery portion 20. In the present specification, the term "pressure" means absolute pressure, unless otherwise specified.

The pressure in the recovery portion 20 during the desorption operation may be, in some cases, 0.1 MPa or less or 0.05 MPa or less. The pressure in the recovery portion 20 during the desorption operation may be, for example, 0.001 MPa or more. Note that a pressurization device 30 described below or a decompression device such as a vacuum pump may be used to adjust the pressure in the recovery portion 20.

The container 22 has a gas inlet 20a. During the adsorption operation, the gas inlet 20a is used as an opening for supplying the separated gas Gs into the container 22. During the desorption operation, the gas inlet 20a may be used as an opening for discharging the adsorbed gas Ga from the container 22. That is, the gas inlet 20a may serve as both an introduction inlet (supply port) and a discharge port for gas.

In the present embodiment, the container 22 further has a gas outlet 20b. During the adsorption operation, the gas outlet 20b is used as an opening for discharging, from the container 22, a non-adsorbed gas Gn that has not been adsorbed by the adsorbent 21 out of the separated gas Gs. That is, during the adsorption operation, the non-adsorbed gas Gn is discharged through the gas outlet 20b. During the desorption operation, the gas outlet 20b is used as an opening for discharging the adsorbed gas Ga from the container 22. That is, during the desorption operation, the adsorbed gas Ga is discharged through the gas outlet 20b.

A pressure regulating valve 50 that regulates the pressure of a gas to be discharged from the recovery portion 20 may be disposed on the gas outlet 20b side of the recovery portion 20. A gas to be discharged from the recovery portion 20 is the non-adsorbed gas Gn during the adsorption operation, and is the adsorbed gas Ga during the desorption operation. During the adsorption operation, adjusting the pressure regulating valve 50 can increase the amount of adsorption of carbon dioxide on the adsorbent 21. Consequently, during the desorption operation, the content of carbon dioxide in the adsorbed gas Ga can be increased. That is, when the adsorption operation is performed and then the desorption operation is performed, the content of carbon dioxide in the adsorbed gas Ga is higher than the content of carbon dioxide in the separated gas Gs. The content of carbon dioxide in the adsorbed gas Ga is, for example, 95 vol% or more.

The container 22 of the recovery portion 20 may be configured to be removable from the gas recovery system 100 and to be movable. This enables the gas recovery system 100 to be more compact. The shape of the container 22 of the recovery portion 20 is not particularly limited. The container 22 may have, for example, a cubic shape, a rectangular parallelepiped shape, a circular columnar shape, or a prismatic shape. For example, conventional carbon dioxide recovery systems using liquefaction require the use of dedicated high-pressure tanks for storing carbon dioxide after liquefaction, and also require the use of dedicated high-pressure tank trucks for transporting carbon dioxide after liquefaction. However, according to the gas recovery system 100 of the present embodiment, as described above, since carbon dioxide can be adsorbed and desorbed in a range of 0.1 MPa to less than 1.1 MPa, a dedicated high-pressure tank such as one for transporting liquefied carbon dioxide is not required to be used as the container 22 of the recovery portion 20. Furthermore, the container 22 of the recovery portion 20 can be used as a container for both storing and transporting carbon dioxide. Moreover, a plurality of the containers 22 can also be stacked for safekeeping.

The material of the container 22 of the recovery portion 20 is not particularly limited. Examples of materials of the container 22 include metals, alloys, plastics, and any combination thereof. The plastic may be a fiber-reinforced plastic. The container 22 may be made of a fiber-reinforced plastic. In this case, the weight of the recovery portion 20 can be reduced.

### (Adsorbent)

The adsorbent 21 is not particularly limited as long as the adsorbent 21 is capable of adsorbing a specific gas such as carbon dioxide contained in the separated gas Gs. The adsorbent 21 may be composed of, for example, a porous material. Examples of the porous material include activated carbon, zeolite, molecular sieve, mesoporous silica, metal-organic frameworks (MOFs), covalent organic frameworks (COFs), metal-organic polyhedra (MOPs), covalent organic polymers (COPs), porous aromatic frameworks (PAFs), hydrogen-bonded organic frameworks (HOFs), and porous organic polymers (POPs). The porous material may include one or a combination of two or more selected from the group consisting of the above materials. The adsorbent 21 may be composed of a polymer having an amino group. Such a polymer is, for example, an amine polymer including a structural unit derived from an epoxy monomer.

The adsorbent 21 may include an MOF. MOFs are crystalline porous materials that include a core such as a metal ion or a metal cluster and include an organic ligand coordinated to the core. MOFs have a larger adsorption capacity per volume compared to other adsorbents. By using an MOF as the adsorbent 21, it is possible to adsorb and desorb a large amount of a specific gas such as carbon dioxide. Some MOFs enable the adsorption and desorption of a large amount of a specific gas such as carbon dioxide with a smaller pressure difference. Furthermore, MOFs are preferred as the adsorbent 21 also in terms of their high repeated adsorption-desorption performance and excellent durability. Moreover, some MOFs exhibit the so-called gate-type adsorption-desorption performance, where the following phenomena are observed: almost no gas adsorption occurs until a specific pressure P1 is reached, however, once the pressure exceeds the specific pressure P1, gas adsorption begins abruptly; and almost no gas desorption occurs until a specific pressure P2 is reached, however, once the pressure reaches or falls below the specific pressure P2, gas desorption begins abruptly.

The MOF used in the adsorbent 21 is not particularly limited, and one with high adsorption-desorption performance for a specific gas such as carbon dioxide is preferred. For example, the adsorption-desorption performance of MOFs for carbon dioxide is known to be significantly influenced by the presence of metal sites (open metal sites) where the oxygen atoms of carbon dioxide coordinate relatively strongly, the specific surface area of the MOFs, and the flexibility of the MOFs. In the low-pressure range (0.1 MPa or less), the adsorption-desorption performance of MOFs for carbon dioxide is susceptible to the influence of the presence of metal sites above. In the high-pressure range (0.1 MPa or more), the adsorption-desorption performance of MOFs for carbon dioxide tends to improve as the specific surface area increases.

In the MOF, the organic ligand includes a functional group for coordination to the core. In the organic ligand, the number of the functional groups is, for example, one or more and may be two or more, three or more, or even four or more. The upper limit for the number of the functional groups is not particularly limited and is, for example, 10 or less. The organic ligand preferably includes four functional groups for coordination to the core. That is, it is preferable that the MOF include, as a core, a metal ion, a metal cluster, or a metal oxide cluster, and include a tetradentate organic ligand. MOFs having such a structure tend to have a large specific surface area, and readily adsorb and desorb a specific gas such as carbon dioxide.

The MOF may consist of, as a core, a metal ion, a metal cluster, or a metal oxide cluster, and a tetradentate organic ligand.

Examples of the metal contained in the core include Cu, Zn, Pd, Mg, Al, Fe, Cr, Zr, Ni, and Co.

The metal ion serving as the core is preferably a metal ion such as Cu²⁺, Zn²⁺, Al³⁺, or Co²⁺, and more preferably Cu²⁺.

The metal cluster serving as the core may be a Zn cluster. An example of MOFs including a Zn cluster is MOF-5.

The metal oxide cluster serving as the core may be a Zr oxide cluster. An example of MOFs including a Zr oxide cluster is UiO-66.

As described above, the organic ligand includes a functional group for coordination to the core. The functional group may be at least one selected from the group consisting of a carboxyl group and a hydroxy group. The functional group may be a carboxyl group. The organic ligand may be a tetracarboxylic acid including four carboxyl groups as the functional groups for coordination to the core.

The organic ligand may include, in addition to the above functional group, a nitrogen atom (specifically, a functional group including a nitrogen atom). Examples of functional groups including a nitrogen atom include amide groups, azo groups, and amino groups. The tetracarboxylic acid serving as the organic ligand may include a nitrogen atom.

The organic ligand may include a ring structure. The number of ring structures included in the organic ligand is, for example, one or more and may be two or more, or even three or more. The upper limit for the number of ring structures is, for example, five or less. The ring structure is preferably an aromatic ring. The aromatic ring may be composed solely of a carbon atom or may be a heteroaromatic ring including a heteroatom. The aromatic ring may be monocyclic or polycyclic. The number of carbons in the aromatic ring is not particularly limited and is, for example, 4 to 14. Specific examples of the aromatic ring include a benzene ring and a naphthalene ring. In the organic ligand, the functional group for coordination to the core may be a substituent on the ring structure.

The organic ligand may be represented by the following formula (a).

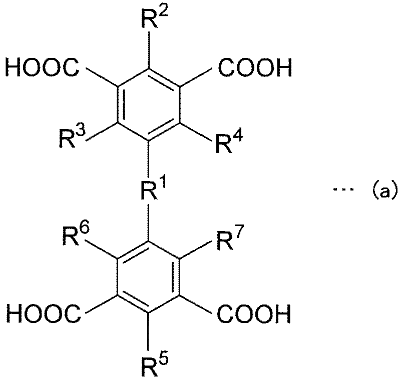

In the above formula (a), R¹ is a single bond or a freely-selected linking group. The freely-selected linking group may include at least one carbon atom. The freely-selected linking group may include one selected from the group consisting of an unsaturated hydrocarbon and a heterocyclic compound. Examples of linking groups including an unsaturated hydrocarbon include arylene groups such as phenylene groups. The freely-selected linking group may further include, in addition to the above, a functional group including a nitrogen atom (e.g., an amide group, an azo group, or an amino group).

In the above formula (a), R² to R⁷ are each independently a hydrogen atom or a freely-selected substituent. Examples of the freely-selected substituent include hydrocarbon groups such as alkyl groups and functional groups including a nitrogen atom, such as nitro groups and amino groups.

An example of MOFs including an organic ligand having the structure represented by the above formula (a) is an MOF having an nbo (niobium oxide) structure. The MOF may have an nbo structure. MOFs having an nbo structure tend to have a large specific surface area, and adsorb a large amount of a specific gas such as carbon dioxide. Note that the MOF may have a structure other than the nbo structure.

It is preferable that the amount of adsorption of the specific gas on the MOF in a pressure range of 0.1 MPa to less than 1.1 MPa be greater than the amount of adsorption of the specific gas on the MOF in a pressure range of 0 MPa to less than 0.1 MPa. Such MOFs are suitable for the application of the gas recovery system 100 of the present embodiment.

The MOF may be, for example, one of the MOFs listed in Table 1 below among those listed in the literature. Note that the MOFs listed in Table 1 are non-limiting examples, and MOFs other than these may be used. In Table 1, on the basis of the data provided in the literature, showing the amount of adsorption of carbon dioxide per unit weight at 0.1 to 1.0 MPa near room temperature (20 to 30°C), the difference between the amount of adsorption per unit weight on the MOF at 1.0 MPa and the amount of adsorption per unit weight on the MOF at 0.1 MPa was calculated as the effective adsorption amount.

**[Table 1]**

| No. | MOF | Temperature (°C) | CO₂ adsorption amount (mmol/g) | | Effective adsorption amount (mmol/g) | Literature |
|---|---|---|---|---|---|---|
| | | | 1.0 MPa | 0.1 MPa | | |
| 1 | NOTT-125 | 25 | 18 | 4 | 14 | Chem. Eur. J. 2014, 20, 7317. |
| 2 | Cu-TPBTM | 25 | 18 | 5 | 13 | J. Am. Chem. Soc. 2011, 133, 748. |
| 3 | HNUST-3 | 25 | 16 | 3 | 13 | Cryst. Growth. Des. 2013, 13, 5001. |
| 4 | HNUST-7 | 25 | 16 | 3 | 13 | CrystEngComm 2018, 20, 1874. |
| 5 | HNUST-5 | 25 | 15 | 2 | 13 | Chem. Commun. 2016, 52, 12988. |
| 6 | NOTT-140 | 25 | 15 | 3 | 12 | Chem. Commun. 2011, 47, 4487. |
| 7 | PCN-61 | 25 | 15 | 3 | 12 | J. Am. Chem. Soc. 2009, 131, 9186. |
| | | | | | | Angew. Chem., Int. Ed. 2010, 49, 5357. |
| 8 | IRMOF-3 | 25 | 13 | 1 | 12 | J. Am. Chem. Soc. 2005, 127, 17998. |
| 9 | PCN-11 | 27 | 15 | 4 | 11 | Chem. Mater. 2008, 20, 3145. |
| | | | | | | Energy Environ. Sci. 2011, 4, 2177. |
| 10 | PCN-16 | 27 | 14 | 3 | 11 | Chem. Commun. 2010, 46, 1329. |
| | | | | | | Energy Environ. Sci. 2011, 4, 2177. |
| 11 | HNUST-8 | 25 | 14 | 3 | 11 | Inorg. Chem. Front. 2018, 5, 2355. |
| 12 | PCN-66 | 25 | 13 | 2 | 11 | J. Am. Chem. Soc. 2009, 131, 9186. |
| | | | | | | Angew. Chem., Int. Ed. 2010, 49, 5357. |
| 13 | NJU-Bai22 | 25 | 13 | 3 | 10 | Chem. Eur. J. 2016, 22, 6277. |
| 14 | NJU-Bai3 | 25 | 12 | 2 | 10 | Chem. Commun. 2012, 48, 3058. |
| 15 | IRMOF-1 | 25 | 11 | 1 | 10 | J. Am. Chem. Soc. 2005, 127, 17998. |
| 16 | IRMOF-6 | 25 | 11 | 1 | 10 | J. Am. Chem. Soc. 2005, 127, 17998. |
| 17 | MOF-177 | 25 | 11 | 1 | 10 | Nature 2004, 427, 523. |
| | | | | | | Science 2010, 329, 424. |
| 18 | IRMOF-11 | 25 | 11 | 2 | 9 | J. Am. Chem. Soc. 2005, 127, 17998. |
| 19 | Zn₄O (FMA) | 27 | 10 | 1 | 9 | Inorg. Chem. 2009, 48, 4649. |
| 20 | MOF-205 | 25 | 10 | 1 | 9 | Science 2010, 329, 424. |
| 21 | PCN-124 | 25 | 13 | 5 | 8 | Chem. Commun. 2012, 48, 9995. |
| | | | | | | Chem. Eur. J. 2016, 22, 6277. |
| 22 | HKUST-1 | 25 | 12 | 4 | 8 | Science 1999, 283, 1148. |
| | | | | | | Energy Fuels 2009, 23, 2785. |

The MOF may be, for example, one of the MOFs listed in Table 2 below. Note that the MOFs listed in Table 2 are non-limiting examples, and MOFs other than these may be used. For No. 23 in Table 2, on the basis of the data provided in the literature (Nano Res. 14, 2021, 507-511), showing the amount of adsorption of carbon dioxide per unit weight at 0.1 to 1.0 MPa near room temperature (20 to 30°C), the difference between the amount of adsorption per unit weight on the MOF at 1.0 MPa and the amount of adsorption per unit weight on the MOF at 0.1 MPa was calculated as the effective adsorption amount. For Nos. 24 to 35 in Table 2, each MOF was subjected to vacuum heat pretreatment at 150°C for 6 hours, and then the amount of adsorption per unit weight on the MOF at 1.0 MPa and the amount of adsorption per unit weight on the MOF at 0.1 MPa were measured at 25°C using a high-pressure gas adsorption apparatus (iSorb HP1 manufactured by Anton Paar GmbH). The difference between these two values was calculated as the effective adsorption amount.

**[Table 2]**

| No. | MOF | Temperature (°C) | CO₂ adsorption amount (mmol/g) | | Effective adsorption amount (mmol/g) |
|---|---|---|---|---|---|
| | | | 1.0 MPa | 0.1 MPa | |
| 23 | BUT-22 | 23 | 16 | 3 | 13.0 |
| 24 | ZIF-8 | 25 | 5.8 | 0.7 | 5.1 |
| 25 | ZIF-7 | 25 | 2.4 | 1.6 | 0.8 |
| 26 | Mg-MOF-74 | 25 | 9.0 | 5.0 | 4.0 |
| 27 | Zn-JAST | 25 | 5.3 | 1.0 | 4.3 |
| 28 | MIL-101 (Cr) | 25 | 7.4 | 1.2 | 6.2 |
| 29 | MIL-100 (Fe) | 25 | 7.9 | 1.6 | 6.3 |
| 30 | UiO-66 | 25 | 6.5 | 1.3 | 5.2 |
| 31 | UiO-67 | 25 | 8.8 | 1.5 | 7.3 |
| 32 | ZIF-67 | 25 | 5.7 | 0.7 | 5.1 |
| 33 | Al-bpdc (DUT-5) | 25 | 10.6 | 1.3 | 9.3 |
| 34 | Al-fumarate | 25 | 4.5 | 1.8 | 2.7 |
| 35 | MIL-53 (Al) | 25 | 4.1 | 1.3 | 2.8 |

The MOFs listed in Table 1 have a relatively large pore size and an excellent effective adsorption amount per weight of 8 to 14 mmol/g. Accordingly, these are considered useful for transporting a specific gas such as carbon dioxide. The MOFs listed as No. 1 (NOTT-125), No. 3 (HNUST-3), No. 4 (HNUST-7), No. 9 (PCN-11), and No. 10 (PCN-16) each have an nbo structure. The MOF listed as No. 22 (HKUST-1) has the advantage of inexpensive mass production.

Note that some MOFs, such as those listed as No. 2 (Cu-TPBTM), No. 3 (HNUST-3), No. 5 (HNUST-5), and No. 22 (HKUST-1) in Table 1, have relatively low stability to water. Accordingly, for example, directly adsorbing exhaust gas containing carbon dioxide onto such an MOF not only fails to achieve a sufficient adsorption effect of the MOF, but also may deteriorate the durability of the MOF. According to the gas recovery system 100 of the present embodiment, the separated gas Gs, obtained by separating the gas mixture G containing a specific gas such as carbon dioxide by the gas separation device 10, can be adsorbed onto the MOF in the recovery portion 20, thereby achieving a sufficient adsorption effect of the MOF and suppressing deterioration of the durability of the MOF.

Here, in the embodiment of the gas recovery system described above, the gas separation device is described as a device that separates the gas mixture G containing carbon dioxide to obtain the separated gas Gs having a higher content of carbon dioxide than the gas mixture G, and the recovery portion is described as including an adsorbent that adsorbs carbon dioxide contained in the separated gas Gs. However, in the present invention, a gas to be separated by the gas separation device and a gas to be adsorbed by the adsorbent in the recovery portion are not limited to carbon dioxide.

That is, another aspect of the present invention provides a gas recovery system including:
a gas separation device that separates a gas mixture containing a specific gas to obtain a separated gas having a higher content of the specific gas than the gas mixture; and
a recovery portion including an adsorbent, the adsorbent being capable of adsorbing the specific gas contained in the separated gas, wherein
the adsorbent includes a metal-organic framework (MOF).

The above gas separation device can be, for example, the gas separation device 10 described above. The MOF included in the above adsorbent can be, for example, any of those listed as the MOF used in the adsorbent 21.

### [Pressurization Device]

The gas recovery system 100 may further include the pressurization device 30 that pressurizes the separated gas Gs. In the case where the gas recovery system 100 includes the pressurization device 30, the pressurization device 30 may be disposed upstream of the recovery portion 20 to pressurize the inside of the recovery portion 20. During the adsorption operation, pressurizing the separated gas Gs by the pressurization device 30 can enhance the adsorption of carbon dioxide on the adsorbent 21. During the desorption operation, reducing the pressurization performed by the pressurization device 30 can enhance the desorption of the adsorbed gas Ga from the adsorbent 21.

The pressurization device 30 may be a pump that pumps the separated gas Gs toward the recovery portion 20. The pump is typically a gas transport pump, and examples thereof include reciprocating pumps and rotary pumps. Examples of reciprocating pumps include diaphragm pumps and rocking piston pumps. Examples of rotary pumps include: liquid seal pumps; oil rotary pumps (rotary pumps); mechanical booster pumps; and various types of dry pumps such as roots, claw, screw, turbo, and scroll dry pumps. The pump serving as the pressurization device 30 may include a variable speed mechanism for changing, for example, a rotational speed. An example of the variable speed mechanism is an inverter that drives a motor of the pump. By controlling, for example, the rotational speed of the pump using the variable speed mechanism, it is possible to appropriately adjust the pressure in the recovery portion 20.

### [Combustion Device]

The gas recovery system 100 may further include a combustion device 40 that is supplied with a fuel gas Gf containing oxygen and that discharges the gas mixture G.

In the present specification, the term "combustion device" means a device that combusts fuel using fuel gas and discharges exhaust gas. The combustion device 40 is, for example, a boiler, an incinerator, or an internal combustion engine such as an engine. The combustion device 40 is typically a boiler.

In the gas recovery system 100 of the present embodiment, the gas mixture G discharged from the combustion device 40 can be separated by the gas separation device 10, thereby increasing the content of carbon dioxide in the separated gas Gs. Thus, according to the gas recovery system 100 of the present embodiment, the gas separation device 10 can increase the content of carbon dioxide in the separated gas Gs even in a region where the concentration of carbon dioxide is low (e.g., the content of carbon dioxide in exhaust gas is 10 vol% or less). The content of carbon dioxide in the separated gas Gs is, for example, 70 vol% or more and 95 vol% or less.

The combustion device 40 may combust fuel using the fuel gas Gf containing oxygen and discharge the gas mixture G containing carbon dioxide as exhaust gas.

The fuel used in the combustion device 40 is not particularly limited. Examples of the fuel include liquid fuels such as petroleum, gaseous fuels such as natural gas, solid fuels such as coal and wood, and special fuel such as waste materials. The combustion device 40 may have connected thereto a fuel supply device (not shown) that supplies fuel.

The combustion device 40 may include a burner for combusting fuel, a fuel supply pipe for supplying fuel to the burner, and a fuel gas supply pipe for supplying the gas mixture G to the burner. In this case, the combustion device 40 combusts fuel using the fuel gas Gf supplied to the burner, thereby generating the gas mixture G containing carbon dioxide.

The content of oxygen in the fuel gas Gf to be supplied to the combustion device 40 is not particularly limited. The content of oxygen in the fuel gas Gf is, for example, 20 vol% or more. In the case where the content of oxygen in the fuel gas Gf is 20 vol% or more, the content of carbon dioxide in the gas mixture G to be discharged from the combustion device 40 can increase. Consequently, the separation power of the gas separation device 10 can be reduced. In the present specification, the content (vol%) of oxygen in the fuel gas Gf is the volume ratio of oxygen to the fuel gas Gf under standard conditions.

The upper limit for the content of oxygen in the fuel gas Gf to be supplied to the combustion device 40 is not particularly limited. The upper limit for the content of oxygen in the fuel gas Gf is, for example, 100 vol%. The content of oxygen in the fuel gas Gf may be 90 vol% or less, 80 vol% or less, or 70 vol% or less.

The combustion device 40 may have connected thereto a gas supply unit (not shown) that supplies the fuel gas Gf to the combustion device 40. The gas supply unit may be a tank or cylinder that stores the fuel gas Gf. The gas supply unit may include a gas generation device that generates the fuel gas Gf from air. The gas supply unit may be configured such that the fuel gas Gf generated by the gas generation device is stored in the gas tank or gas cylinder described above.

### [Gas Passages]

The gas recovery system 100 may further include, as gas passages, a gas supply passage 61, a permeated gas discharge passage 62, and a non-permeated gas discharge passage 63.

The gas supply passage 61 is a passage for supplying the gas mixture G from the combustion device 40 to the gas separation device 10 during the adsorption operation and is connected to a gas outlet 40b of the combustion device 40 and the supply space inlet 13a of the gas separation device 10.

The permeated gas discharge passage 62 is a passage for discharging the permeated gas S₁ from the gas separation device 10 during operation and is connected to the permeation space outlet 14b of the gas separation device 10 and the gas inlet 20a of the recovery portion 20. In the permeated gas discharge passage 62, a pump may be disposed to control the flow rate of the permeated gas S₁, for example. The non-permeated gas discharge passage 63 is a passage for discharging the non-permeated gas S₂ from the gas separation device 10 during operation and is connected to the supply space outlet 13b of the gas separation device 10. In the non-permeated gas discharge passage 63, a pump may be disposed to control the flow rate of the non-permeated gas S₂, for example.

In the example in FIG. 1, the pressurization device 30 is disposed in the permeated gas discharge passage 62. The pressurization device 30 can pressurize the inside of the recovery portion 20.

The gas recovery system 100 may further include a gas discharge passage 71 as a gas passage. The gas discharge passage 71 is connected to the gas outlet 20b of the recovery portion 20. The gas discharge passage 71 is used, during the adsorption operation, as a passage for discharging the non-adsorbed gas Gn from the recovery portion 20. The gas discharge passage 71 is used, during the desorption operation, as a passage for discharging the adsorbed gas Ga containing carbon dioxide from the recovery portion 20. In the example in FIG. 1, the pressure regulating valve 50 is disposed in the gas discharge passage 71.

The gas passages in the gas recovery system 100 are each composed of, for example, piping made of metal or resin, unless otherwise specified.

In the case where the gas separation device 10 employs the decompression method, the gas recovery system 100 may further include a decompression device (not shown) that decompresses the permeation space side of the gas separation device 10. In the case where the gas separation device 10 employs the pressurization method, the gas recovery system 100 may further include a pressurization device (not shown) that pressurizes the non-permeation space side of the gas separation device 10. The decompression device or the pressurization device can be any of the pumps described above as the pump serving as the pressurization device 30. In the case where the gas separation device 10 employs the sweep gas method, the gas recovery system 100 may further include a supply device (not shown) that supplies inert gas, dry air, and the like to the permeation space side of the gas separation device 10.

The gas recovery system 100 may further include a control device 60 that controls the members of the gas recovery system 100. The control device 60 is, for example, a digital signal processor (DSP) including an A/D conversion circuit, an input/output circuit, an arithmetic circuit, a storage device, and the like. The control device 60 stores a program for appropriately operating the gas recovery system 100. For example, the control device 60 may control the operation of the pressurization device 30 to adjust the pressure in the recovery portion 20, thereby pressurizing the separated gas Gs.

The gas recovery system 100 may further include a heating device (not shown) that heats the adsorbent 21 of the recovery portion 20. The heating device may have any configuration as long as the heating device is capable of heating the adsorbent 21 of the recovery portion 20. The heating device is typically a heater. During the desorption operation, heating the adsorbent 21 by the heating device further enhances the desorption of the adsorbed gas Ga from the adsorbent 21.

In the first embodiment, the content of carbon dioxide in the adsorbed gas Ga obtained by the gas recovery system 100 is, for example, 95 vol% or more. Thus, by using the gas recovery system 100, it is possible to recover high-purity carbon dioxide.

The use form of carbon dioxide recovered using the gas recovery system 100 of the first embodiment is not particularly limited. For example, the recovered carbon dioxide may be directly used as dry ice after undergoing a solidification process. The recovered carbon dioxide may be reused as a carbon resource (carbon compound).

### [Operation Method for Gas Recovery System]

An operation method for the gas recovery system 100 of the first embodiment includes: separating the gas mixture G by the gas separation device 10 to obtain the separated gas Gs having a higher content of carbon dioxide than the gas mixture G (Step ST1); and adsorbing the carbon dioxide contained in the separated gas Gs (permeated gas S₁) by the adsorbent 21 of the recovery portion 20 (Step ST2).

In Step ST1, the gas mixture G is separated by the gas separation device 10 to obtain the separated gas Gs. In the case where the gas separation device 10 includes the separation membrane 11, the separation membrane 11 can separate the gas mixture G, thereby obtaining the separated gas Gs. A specific method of performing Step ST1 is described with reference to FIGS. 2 and 3. In Step ST1, the gas mixture G is initially supplied through the supply space inlet 13a to a supply space 13 of the gas separation device 10. This can bring the gas mixture G into contact with one surface (e.g., principal surface 11a) of the separation membrane 11.

Next, in a state in which the gas mixture G is in contact with the one surface of the separation membrane 11, the space adjacent to the other surface (e.g., principal surface 11b) of the separation membrane 11 is decompressed. In detail, a permeation space 14 is decompressed through the permeation space outlet 14b. The decompression of the permeation space 14 can be performed, for example, by a decompression device such as a vacuum pump. The pressure in the permeation space 14 is, for example, 50 kPa or less, and may be 20 kPa or less, 10 kPa or less, 5 kPa or less, 3 kPa or less, or even 2 kPa or less.

By decompressing the permeation space 14, the separated gas Gs, namely, the permeated gas S₁ having a high content of carbon dioxide, can be obtained on the other surface (e.g., principal surface 11b) side of the separation membrane 11. That is, the permeated gas S₁ is supplied to the permeation space 14. The permeated gas S₁ is discharged through the permeation space outlet 14b to the outside of the gas separation device 10.

On the other hand, the content of carbon dioxide in the gas mixture G gradually decreases from the supply space inlet 13a toward the supply space outlet 13b of the supply space 13. The gas mixture G processed in the supply space 13, namely, the non-permeated gas S₂, is discharged through the supply space outlet 13b to the outside of the gas separation device 10.

In Step ST1, the carbon dioxide contained in the gas mixture G can be allowed to preferentially permeate through the separation membrane 11 of the gas separation device 10. Consequently, the permeated gas S₁ obtained through the operation of the gas separation device 10 has a higher content of carbon dioxide than the gas mixture G supplied to the gas separation device 10. The ratio of the content (wt%) of carbon dioxide in the permeated gas S₁ to the content (wt%) of carbon dioxide in the gas mixture G supplied to the gas separation device 10 is not particularly limited.

In Step ST2, the carbon dioxide contained in the separated gas Gs (permeated gas S₁) is adsorbed by the adsorbent 21 of the recovery portion 20. The adsorption of carbon dioxide by the adsorbent 21 is performed during the adsorption operation. That is, Step ST2 is the step corresponding to the adsorption operation.

In Step ST2, the pressure in the recovery portion 20 during the adsorption operation can be 0.1 MPa or more and less than 1.1 MPa.

Step ST2 may include pressurizing the separated gas Gs in the recovery portion 20 by the pressurization device 30. In this case, during the adsorption operation, the adsorption of carbon dioxide onto the adsorbent 21 can be enhanced.

The operation method for the gas recovery system 100 may further include desorbing the adsorbed gas Ga containing carbon dioxide from the adsorbent 21 of the recovery portion 20 (Step ST3). The desorption of the adsorbed gas Ga from the adsorbent 21 is performed during the desorption operation. That is, Step ST3 is the step corresponding to the desorption operation.

Step ST3 may include reducing the pressurization of the separated gas Gs in the recovery portion 20 performed by the pressurization device 30. In Step ST3, the pressure in the recovery portion 20 may be reduced. In this case, during the desorption operation, the desorption of the adsorbed gas Ga from the adsorbent 21 can be enhanced.

Step ST3 may include heating the inside of the recovery portion 20 by the heating device. In this case, during the desorption operation, the desorption of the adsorbed gas Ga from the adsorbent 21 can be enhanced.

According to Step ST3, the adsorbed gas Ga having a high content of carbon dioxide can be produced. That is, Step ST3 enables carbon dioxide to be obtained as the adsorbed gas Ga.

The operation method for the gas recovery system 100 of the first embodiment may further include supplying the fuel gas Gf containing oxygen to the combustion device 40 and discharging the gas mixture G containing carbon dioxide from the combustion device 40 (Step ST4). Step ST4 is performed prior to Step ST1.

According to the operation method for the gas recovery system 100 of the first embodiment, it is possible to reduce the recovery power for carbon dioxide.

### [Modification 1]

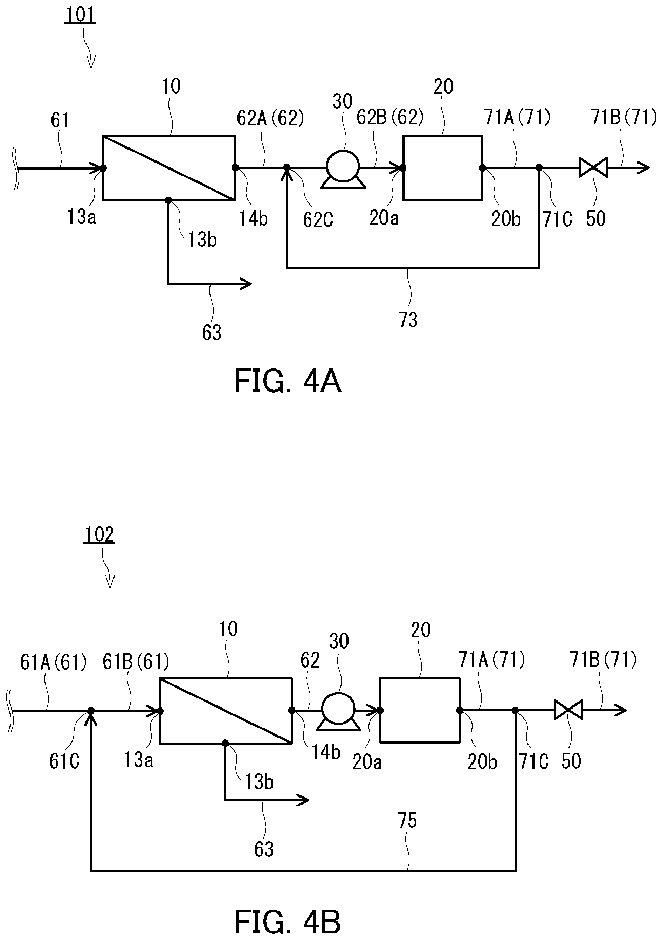

FIG. 4A is a schematic configuration diagram showing Modification 1 of the gas recovery system 100 of the first embodiment. A gas recovery system 101 of Modification 1 further includes a non-adsorbed gas circulation passage 73 for feeding at least a portion of the non-adsorbed gas Gn to the recovery portion 20.

In the example in FIG. 4A, the permeated gas discharge passage 62 has a first portion 62A and a second portion 62B. The first portion 62A is a portion connecting the permeation space outlet 14b of the gas separation device 10 and a joining point 62C to each other, whereas the second portion 62B is a portion connecting the joining point 62C and the gas inlet 20a of the recovery portion 20 to each other. The pressurization device 30 is disposed in the second portion 62B. In the example in FIG. 4A, the gas discharge passage 71 has a first portion 71A and a second portion 71B. The first portion 71A is a portion connecting the gas outlet 20B of the recovery portion 20 and a branching point 71C to each other, whereas the second portion 71B is a portion extending from the branching point 71C to the outside. In the example in FIG. 4A, the non-adsorbed gas circulation passage 73 is branched from the gas discharge passage 71 at the branching point 71C and joined to the permeated gas discharge passage 62 at the joining point 62C. With such a configuration, the gas recovery system 101 is configured such that during the adsorption operation, at least a portion of the non-adsorbed gas Gn is mixed with the separated gas Gs and circulates through the second portion 62B, the first portion 71A, and the non-adsorbed gas circulation passage 73. By circulating at least a portion of the non-adsorbed gas Gn to the recovery portion 20, it is possible to increase the content of carbon dioxide in the adsorbed gas Ga desorbed from the recovery portion 20. That is, it is achieved that when the adsorption operation is performed and then the desorption operation is performed, the content of carbon dioxide in the adsorbed gas Ga is higher than the content of carbon dioxide in the separated gas Gs (permeated gas S₁). The content of carbon dioxide in the adsorbed gas Ga is, for example, 95 vol% or more.

In the example in FIG. 4A, the non-adsorbed gas circulation passage 73 is branched from the gas discharge passage 71 at the branching point 71C and joined to the permeated gas discharge passage 62 at the joining point 62C. However, the connection point of the non-adsorbed gas circulation passage 73 is not limited to the example shown in FIG. 4A. For example, the non-adsorbed gas circulation passage 73 may be branched from the gas outlet 20b of the recovery portion 20 to be joined to the permeated gas discharge passage 62 at the joining point 62C.

An operation method for the gas recovery system 101 further includes, in addition to the above-described steps of the operation method for the gas recovery system 100, circulating at least a portion of the non-adsorbed gas Gn to the recovery portion 20 during the adsorption operation. According to the operation method for the gas recovery system 101, it is possible to increase the content of carbon dioxide in the adsorbed gas Ga desorbed from the recovery portion 20.

### [Modification 2]

FIG. 4B is a schematic configuration diagram showing Modification 2 of the gas recovery system 100 of the first embodiment. A gas recovery system 102 of Modification 2 further includes a non-adsorbed gas circulation passage 75 for feeding at least a portion of the non-adsorbed gas Gn to the gas separation device 10. In the following, elements common to Modification 1 are denoted by the same reference signs, and their descriptions may be omitted.

In the example in FIG. 4B, the non-adsorbed gas circulation passage 75 is branched from the gas discharge passage 71 at the branching point 71C and joined to the gas supply passage 61 at a joining point 61C. With such a configuration, the gas recovery system 102 is configured such that during the adsorption operation, at least a portion of the non-adsorbed gas Gn is mixed with the gas mixture G and circulates through a second portion 61B, the permeated gas discharge passage 62, the first portion 71A, and the non-adsorbed gas circulation passage 75. By circulating at least a portion of the non-adsorbed gas Gn to the gas separation device 10, it is possible to increase the content of carbon dioxide in the adsorbed gas Ga desorbed from the recovery portion 20. That is, it is achieved that when the adsorption operation is performed and then the desorption operation is performed, the content of carbon dioxide in the adsorbed gas Ga is higher than the content of carbon dioxide in the separated gas Gs (permeated gas S₁). The content of carbon dioxide in the adsorbed gas Ga is, for example, 95 vol% or more.

In the example in FIG. 4B, the non-adsorbed gas circulation passage 75 is branched from the gas discharge passage 71 at the branching point 71C and joined to the gas supply passage 61 at the joining point 61C. However, the connection point of the non-adsorbed gas circulation passage 75 is not limited to the example shown in FIG. 4B. For example, the non-adsorbed gas circulation passage 75 may be branched from the gas outlet 20b of the recovery portion 20 to be joined to the gas supply passage 61 at the joining point 61C.

An operation method for the gas recovery system 102 further includes, in addition to the above-described steps of the operation method for the gas recovery system 100, circulating at least a portion of the non-adsorbed gas Gn to the gas separation device 10 during the adsorption operation. According to the operation method for the gas recovery system 102, it is possible to increase the content of carbon dioxide in the adsorbed gas Ga desorbed from the recovery portion 20.

### [Modification 3]

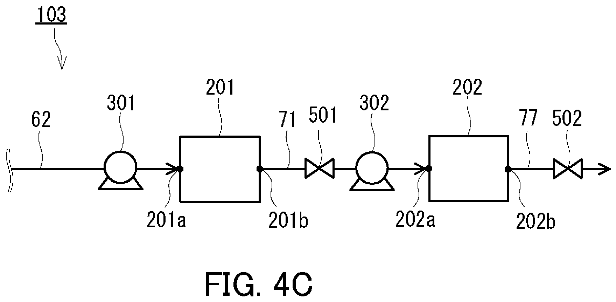

FIG. 4C is a schematic configuration diagram showing Modification 3 of the gas recovery system 100 of the first embodiment. In FIG. 4C, the gas separation device 10 is omitted. A gas recovery system 103 of Modification 3 includes a plurality of the recovery portions 20 connected in series, and is configured such that during the desorption operation, the adsorbed gas Ga, discharged through the gas outlet 20b of the upstream recovery portion 20, is supplied through the gas inlet 20a of the downstream recovery portion 20.

FIG. 4C shows an example in which a first recovery portion 201 and a second recovery portion 202 are connected in series. The gas recovery system 103 is configured such that during the desorption operation, the adsorbed gas Ga, discharged through a gas discharge port 201b of the upstream first recovery portion 201, is supplied through a gas introduction port 202a of the downstream second recovery portion 202. With such a configuration, it is possible to increase the content of carbon dioxide in the adsorbed gas Ga desorbed from the most downstream recovery portion 20 (second recovery portion 202). That is, it is achieved that when the adsorption operation is performed and then the desorption operation is performed, the content of carbon dioxide in the adsorbed gas Ga is higher than the content of carbon dioxide in the separated gas Gs (permeated gas S₁). The content of carbon dioxide in the adsorbed gas Ga is, for example, 95 vol% or more.

In the gas recovery system 103, the gas discharge passage 71 connects the gas discharge port 201b of the first recovery portion 201 and the gas introduction port 202a of the second recovery portion 202 to each other. In the gas discharge passage 71, a pressurization device 302 that pressurizes the inside of the second recovery portion 202 is disposed. In the gas discharge passage 71, a pressure regulating valve 501 may be disposed that regulates the pressure of a gas to be discharged from the first recovery portion 201 (non-adsorbed gas Gn, adsorbed gas Ga).

The gas recovery system 103 further includes a gas discharge passage 77 as a gas passage. The gas discharge passage 77 is connected to a gas discharge port 202b of the second recovery portion 202. In the gas discharge passage 77, a pressure regulating valve 502 may be disposed that regulates the pressure of a gas to be discharged from the second recovery portion 202 (non-adsorbed gas Gn, adsorbed gas Ga).

An operation method for the gas recovery system 103 further includes, in addition to the above-described steps of the operation method for the gas recovery system 100, supplying the adsorbed gas Ga, discharged through the gas outlet 20b of the upstream recovery portion 20, through the gas inlet 20a of the downstream recovery portion 20 during the desorption operation. According to the operation method for the gas recovery system 102, it is possible to increase the content of carbon dioxide in the adsorbed gas Ga desorbed from the most downstream recovery portion 20.

### <Second Embodiment>

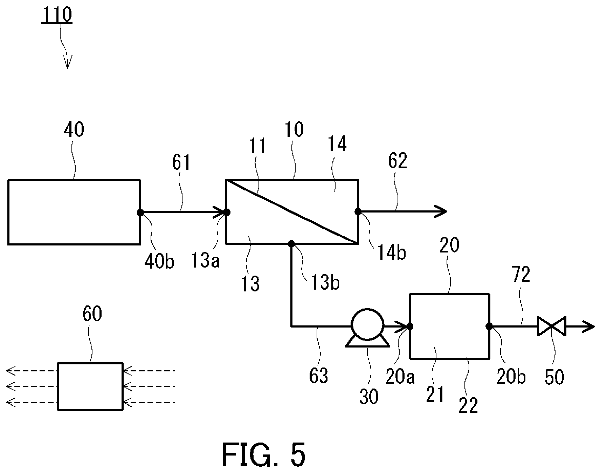

FIG. 5 is a schematic configuration diagram showing an example of the gas recovery system 110 of the second embodiment. The gas recovery system 110 includes the gas separation device 10 and the recovery portion 20. The gas separation device 10 includes the separation membrane 11. The separation membrane 11 separates the gas mixture G containing carbon dioxide into the permeated gas S₁ and the non-permeated gas S₂. In the second embodiment, the non-permeated gas S₂ has a higher content of carbon dioxide than the gas mixture G. That is, in the second embodiment, the non-permeated gas S₂ is the separated gas Gs. In the following, elements common to the first embodiment are denoted by the same reference signs, and their descriptions may be omitted.

### [Gas Separation Device]

In the second embodiment, the separation membrane 11 is a membrane permeable preferentially to nitrogen contained in the gas mixture G (nitrogen separation membrane). In this case, the content of carbon dioxide in the permeated gas S₁ is lower than the content of carbon dioxide in the gas mixture G. On the other hand, the content of carbon dioxide in the non-permeated gas S₂ is higher than the content of carbon dioxide in the gas mixture G. That is, in the case where the separation membrane 11 is a nitrogen separation membrane, the non-permeated gas S₂ corresponds to the separated gas Gs.

### (Separation Functional Layer)

In the second embodiment, the separation functional layer 1 is a layer permeable preferentially to nitrogen contained in the gas mixture G.

### (Intermediate Layer)

The intermediate layer 2 can be the one mentioned as the intermediate layer 2 for the first embodiment.

### (Porous Support Member)

The porous support member 3 can be the one mentioned as the porous support member 3 for the first embodiment.

### [Recovery Portion]

The recovery portion 20 includes the adsorbent 21 that adsorbs carbon dioxide contained in the supplied separated gas Gs (non-permeated gas S₂). The adsorbent 21 can be any of those mentioned as the adsorbent 21 in the first embodiment.

### [Gas Passage]

In the second embodiment, the permeated gas discharge passage 62 is connected to the permeation space outlet 14b of the gas separation device 10. The non-permeated gas discharge passage 63 is connected to the supply space outlet 13b of the gas separation device 10 and the gas inlet 20a of the recovery portion 20. In the non-permeated gas discharge passage 63, the pressurization device 30 is disposed.

The gas recovery system 110 may further include a gas discharge passage 72 as a gas passage. The gas discharge passage 72 is connected to the gas outlet 20b of the recovery portion 20. The gas discharge passage 72 is used as a passage for discharging the non-adsorbed gas Gn from the recovery portion 20 during the adsorption operation. The gas discharge passage 72 is used as a passage for discharging the adsorbed gas Ga containing carbon dioxide from the recovery portion 20 during the desorption operation. In the second embodiment, the pressure regulating valve 50 is disposed in the gas discharge passage 72.

In the second embodiment, the content of carbon dioxide in the adsorbed gas Ga obtained by the gas recovery system 110 is, for example, 95 vol% or more. Thus, by using the gas recovery system 110, it is possible to recover high-purity carbon dioxide.

The use form of carbon dioxide recovered using the gas recovery system 110 of the second embodiment is not particularly limited. For example, the recovered carbon dioxide may be directly used as dry ice after undergoing a solidification process. The recovered carbon dioxide may be reused as a carbon resource (carbon compound).

### [Operation Method for Gas Recovery System]

An operation method for the gas recovery system 110 of the second embodiment includes: separating the gas mixture G by the gas separation device 10 to obtain the separated gas Gs having a higher content of carbon dioxide than the gas mixture G (Step ST1); and adsorbing the carbon dioxide contained in the separated gas Gs (non-permeated gas S₂) by the adsorbent 21 of the recovery portion 20 (Step ST2). The operation method of the second embodiment is basically the same as the operation method of the first embodiment, except that the separated gas Gs is the non-permeated gas S₂. In the following, only the steps that differ from those in the operation method of the first embodiment are described, and the descriptions of other steps are omitted.

In Step ST1, in a state in which the gas mixture G is in contact with one surface of the separation membrane 11, the space adjacent to the other surface (e.g., principal surface 11b) of the separation membrane 11 is decompressed. By decompressing the permeation space 14, the permeated gas S₁ having a high content of nitrogen and a low content of carbon dioxide can be obtained on the other surface (e.g., principal surface 11b) side of the separation membrane 11. That is, the permeated gas S₁ is supplied to the permeation space 14. The permeated gas S₁ is discharged through the permeation space outlet 14b to the outside of the gas separation device 10.

On the other hand, the content of carbon dioxide in the gas mixture G gradually increases from the supply space inlet 13a toward the supply space outlet 13b of the supply space 13. The separated gas Gs processed in the supply space 13, namely, the non-permeated gas S₂, is discharged through the supply space outlet 13b to the outside of the gas separation device 10.

In Step ST1, the nitrogen contained in the gas mixture G can be allowed to preferentially permeate through the separation membrane 11 of the gas separation device 10. Consequently, the non-permeated gas S₂ obtained through the operation of the gas separation device 10 has a higher content of carbon dioxide than the gas mixture G supplied to the gas separation device 10. The ratio of the content (wt%) of carbon dioxide in the non-permeated gas S₂ to the content (wt%) of carbon dioxide in the gas mixture G supplied to the gas separation device 10 is not particularly limited.

In Step ST2, the carbon dioxide contained in the separated gas Gs (non-permeated gas S₂) is adsorbed by the adsorbent 21 of the recovery portion 20.

According to the operation method for the gas recovery system 110 of the second embodiment, it is possible to reduce the recovery power for carbon dioxide.

### [Modification 1]

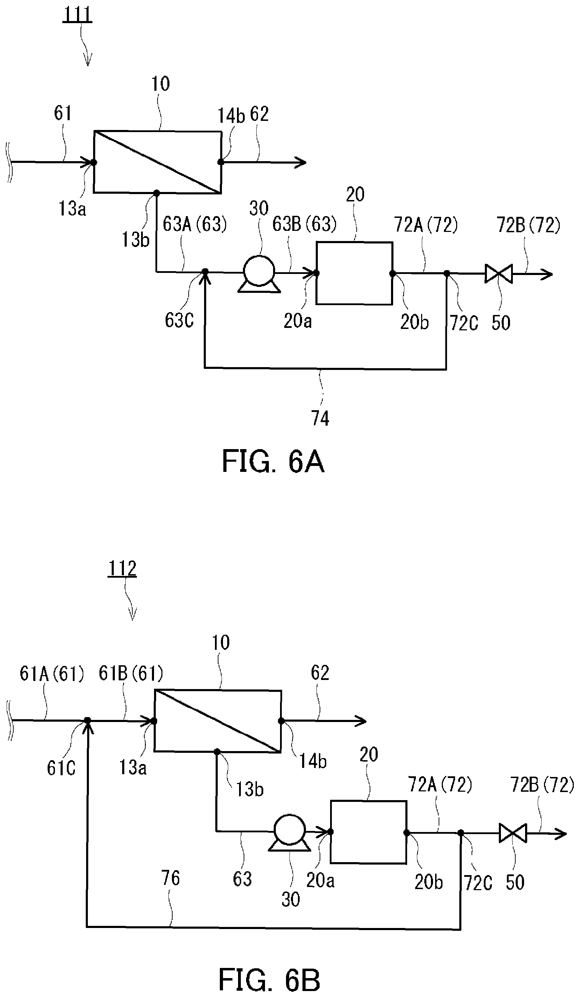

FIG. 6A is a schematic configuration diagram showing Modification 1 of the gas recovery system 110 of the second embodiment. A gas recovery system 111 of Modification 1 further includes a non-adsorbed gas circulation passage 74 for feeding at least a portion of the non-adsorbed gas Gn to the recovery portion 20. The gas recovery system 111 is a modification corresponding to Modification 1 of the first embodiment.

In the example in FIG. 6A, the non-permeated gas discharge passage 63 has a first portion 63A and a second portion 63B. The first portion 63A is a portion connecting the permeation space outlet 14b of the gas separation device 10 and a joining point 63C to each other, whereas the second portion 63B is a portion connecting the joining point 63C and the gas inlet 20a of the recovery portion 20 to each other. The pressurization device 30 is disposed in the second portion 63B. In the gas recovery system 111, in the example in FIG. 6A, the gas discharge passage 72 has a first portion 72A and a second portion 72B. The first portion 72A is a portion connecting the gas outlet 20B of the recovery portion 20 and a branching point 72C to each other, whereas the second portion 72B is a portion extending from the branching point 72C to the outside. In the example in FIG. 6A, the non-adsorbed gas circulation passage 74 is branched from the gas discharge passage 72 at the branching point 72C and joined to the non-permeated gas discharge passage 63 at the joining point 63C. With such a configuration, the gas recovery system 111 is configured such that during the adsorption operation, at least a portion of the non-adsorbed gas Gn is mixed with the separated gas Gs and circulates through the second portion 63B, the first portion 72A, and the non-adsorbed gas circulation passage 74. By circulating at least a portion of the non-adsorbed gas Gn to the recovery portion 20, it is possible to increase the content of carbon dioxide in the adsorbed gas Ga desorbed from the recovery portion 20. That is, it is achieved that when the adsorption operation is performed and then the desorption operation is performed, the content of carbon dioxide in the adsorbed gas Ga is higher than the content of carbon dioxide in the separated gas Gs (non-permeated gas S₂). The content of carbon dioxide in the adsorbed gas Ga is, for example, 95 vol% or more.

In the example in FIG. 6A, the non-adsorbed gas circulation passage 74 is branched from the gas discharge passage 72 at the branching point 72C and joined to the non-permeated gas discharge passage 63 at the joining point 63C. However, the connection point of the non-adsorbed gas circulation passage 74 is not limited to the example shown in FIG. 6A. For example, the non-adsorbed gas circulation passage 74 may be branched from the gas outlet 20b of the recovery portion 20 to be joined to the non-permeated gas discharge passage 63 at the joining point 63C.

An operation method for the gas recovery system 111 further includes, in addition to the above-described steps of the operation method for the gas recovery system 110, circulating at least a portion of the non-adsorbed gas Gn to the recovery portion 20 during the adsorption operation. According to the operation method for the gas recovery system 111, it is possible to increase the content of carbon dioxide in the adsorbed gas Ga desorbed from the recovery portion 20.

### [Modification 2]

FIG. 6B is a schematic configuration diagram showing Modification 2 of the gas recovery system 110 of the second embodiment. A gas recovery system 112 of Modification 2 further includes a non-adsorbed gas circulation passage 76 for feeding at least a portion of the non-adsorbed gas Gn to the gas separation device 10. The gas recovery system 112 is a modification corresponding to Modification 2 of the first embodiment. In the following, elements common to the gas recovery system 111 of Modification 1 are denoted by the same reference signs, and their descriptions may be omitted.

In the example in FIG. 6B, the gas supply passage 61 has a first portion 61A and the second portion 61B. The first portion 61A is a portion connecting to the joining point 61C, whereas the second portion 61B is a portion connecting the joining point 61C and the supply space inlet 13a of the gas separation device 10 to each other. In the example in FIG. 6B, the non-adsorbed gas circulation passage 76 is branched from the gas discharge passage 72 at the branching point 72C and joined to the gas supply passage 61 at the joining point 61C. With such a configuration, the gas recovery system 102 is configured such that during the adsorption operation, at least a portion of the non-adsorbed gas Gn is mixed with the gas mixture G and circulates through the second portion 61B, the non-permeated gas discharge passage 63, the first portion 72A, and the non-adsorbed gas circulation passage 76. By circulating at least a portion of the non-adsorbed gas Gn to the gas separation device 10, it is possible to increase the content of carbon dioxide in the adsorbed gas Ga desorbed from the recovery portion 20. That is, it is achieved that when the adsorption operation is performed and then the desorption operation is performed, the content of carbon dioxide in the adsorbed gas Ga is higher than the content of carbon dioxide in the separated gas Gs (permeated gas S₁). The content of carbon dioxide in the adsorbed gas Ga is, for example, 95 vol% or more.

In the example in FIG. 6B, the non-adsorbed gas circulation passage 76 is branched from the gas discharge passage 72 at the branching point 72C and joined to the gas supply passage 61 at the joining point 61C. However, the connection point of the non-adsorbed gas circulation passage 76 is not limited to the example shown in FIG. 6B. For example, the non-adsorbed gas circulation passage 76 may be branched from the gas outlet 20b of the recovery portion 20 to be joined to the gas supply passage 61 at the joining point 61C.

An operation method for the gas recovery system 112 further includes, in addition to the above-described steps of the operation method for the gas recovery system 110, circulating at least a portion of the non-adsorbed gas Gn to the gas separation device 10 during the adsorption operation. According to the operation method for the gas recovery system 112, it is possible to increase the content of carbon dioxide in the adsorbed gas Ga desorbed from the recovery portion 20.

### [Modification 3]

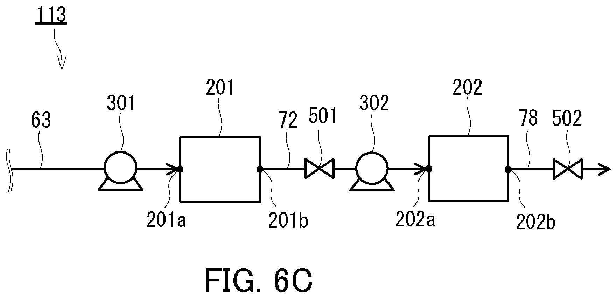

FIG. 6C is a schematic configuration diagram showing Modification 3 of the gas recovery system 110 of the second embodiment. In FIG. 6C, the gas separation device 10 is omitted. A gas recovery system 113 of Modification 3 includes the plurality of recovery portions 20 connected in series, and is configured such that during the desorption operation, the adsorbed gas Ga, discharged through the gas outlet 20b of the upstream recovery portion 20, is supplied through the gas inlet 20a of the downstream recovery portion 20. The gas recovery system 113 is a modification corresponding to Modification 3 of the first embodiment.

FIG. 6C shows an example in which the first recovery portion 201 and the second recovery portion 202 are connected in series. The gas recovery system 113 is configured such that during the desorption operation, the adsorbed gas Ga, discharged through the gas discharge port 201b of the upstream first recovery portion 201, is supplied through the gas introduction port 202a of the downstream second recovery portion 202. With such a configuration, it is possible to increase the content of carbon dioxide in the adsorbed gas Ga desorbed from the most downstream recovery portion 20 (second recovery portion 202). That is, it is achieved that when the adsorption operation is performed and then the desorption operation is performed, the content of carbon dioxide in the adsorbed gas Ga is higher than the content of carbon dioxide in the separated gas Gs (non-permeated gas S₂). The content of carbon dioxide in the adsorbed gas Ga is, for example, 95 vol% or more.

In the gas recovery system 113, the gas discharge passage 72 connects the gas discharge port 201b of the first recovery portion 201 and the gas introduction port 202a of the second recovery portion 202 to each other. In the gas discharge passage 72, the pressurization device 302 that pressurizes the inside of the second recovery portion 202 is disposed. In the gas discharge passage 72, the pressure regulating valve 501 may be disposed that regulates the pressure of a gas to be discharged from the first recovery portion 201 (non-adsorbed gas Gn, adsorbed gas Ga).

The gas recovery system 113 further includes a gas discharge passage 78 as a gas passage. The gas discharge passage 78 is connected to the gas discharge port 202b of the second recovery portion 202. In the gas discharge passage 78, the pressure regulating valve 502 may be disposed that regulates the pressure of a gas to be discharged from the second recovery portion 202 (non-adsorbed gas Gn, adsorbed gas Ga).

An operation method for the gas recovery system 113 further includes, in addition to the above-described steps of the operation method for the gas recovery system 110, supplying the adsorbed gas Ga, discharged through the gas outlet 20b of the upstream recovery portion 20, through the gas inlet 20a of the downstream recovery portion 20 during the adsorption operation. According to the operation method for the gas recovery system 113, it is possible to increase the content of carbon dioxide in the adsorbed gas Ga desorbed from the most downstream recovery portion 20.

### [Another Example of Gas Separation Device]

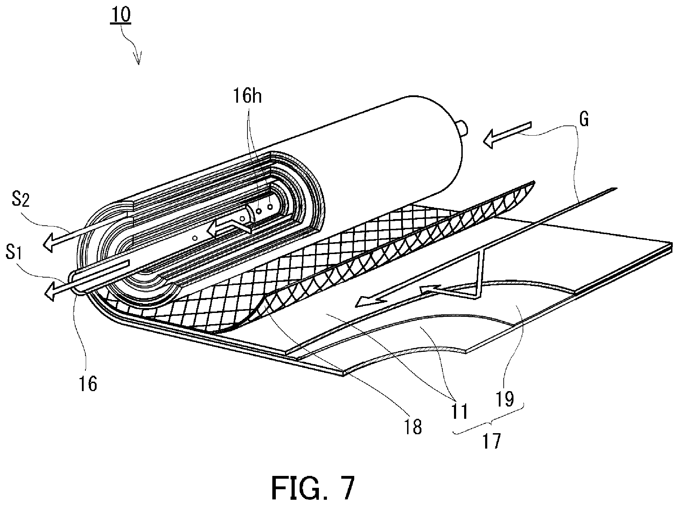

In the case where the gas separation device 10 includes the separation membrane 11, the gas separation device 10 may be a spiral membrane element, a hollow fiber membrane element, a disk-tube membrane element with multiple pervaporation membranes stacked on each other, a plate-and-frame membrane element, or the like. FIG. 7 is a developed perspective view schematically showing a spiral membrane element. The gas separation device 10 may be a spiral membrane element as shown in FIG. 7. The gas separation device 10 (membrane element) in FIG. 7 includes a central tube 16 and a laminate 17 wound around the central tube 16. The laminate 17 includes the separation membrane 11.

The central tube 16 has a cylindrical shape. The central tube 16 has a surface with a through hole 16h to allow the permeated gas S₁ to flow into the central tube 16. The number of the through holes 16h is not particularly limited and may be one or may be two or more. Examples of a material of the central tube 16 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 16 has an inner diameter in a range of, for example, 20 to 100 mm.

The gas separation device 10 includes a plurality of the laminates 17. The laminates 17 each include the separation membrane 11 and a supply-side flow passage material 18. For example, in the laminate 17, the separation membrane 11 is folded in two so that the separation functional layer 1 of the separation membrane 11 is positioned inside, and the supply-side flow passage material 18 is disposed between the two layers of the folded separation membrane 11. The supply-side flow passage material 18 ensures, between the two layers of the folded separation membrane 11, a space serving as the flow passage for the gas mixture G (supply space). Thus, the supply-side flow passage material 18 is used in combination with the separation membrane 11. The number of the laminates 17 is not particularly limited and is, for example, 2 to 30.

The gas separation device 10 further includes a permeation-side flow passage material 19. The permeation-side flow passage material 19 is disposed outside the separation membrane 11 that is folded in two. In detail, a plurality of the permeation-side flow passage materials 19 and the plurality of laminates 17 are alternately stacked. The permeation-side flow passage material 19 ensures, between the laminates 17, a space serving as a flow passage for the permeated gas S₁ (permeation space).

The supply-side flow passage material 18 and the permeation-side flow passage material 19 can be, for example, a resin net, woven fabric, or knitted fabric made of polyethylene, polypropylene, polyethylene terephthalate (PET), polyphenylene sulfide (PPS), or an ethylene-chlorotrifluoroethylene copolymer (ECTFE).

The outer peripheral surface of the membrane element is composed of a shell (not shown) made of a gas-impermeable material. The shell may be made of fiber-reinforced plastic (FRP). The membrane element may be housed in a casing (not shown).

The gas separation device 10 (membrane element) in FIG. 7 can be operated, for example, by the following method. First, the gas mixture G is supplied to one end of the wound laminate 17. The inside of the central tube 16 is decompressed. This causes the permeated gas S₁ that has permeated through the separation membrane 11 to move into the central tube 16. The permeated gas S₁ is discharged through the central tube 16 to the outside. The non-permeated gas S₂ processed by the gas separation device 10 is discharged through the other end of the wound laminate 17 to the outside.

The above descriptions of the embodiments can be applied to one another unless they are technically contradictory. Furthermore, the embodiments and modifications described above may be combined with one another unless they are technically contradictory.

### Examples

The present invention is described in more detail below by way of calculation examples; however, the present invention is not limited to these examples.

### (Calculation Example 1)

A simulation was performed on the operation of the gas recovery system 100 shown in FIG. 1, using a carbon dioxide separation membrane having a CO₂ permeation rate of 800 GPU, a N₂ permeation rate of 26.6 GPU, and a separation factor α of 30. The gas recovery system 100 included the gas separation device 10, the recovery portion 20, the pressurization device 30, and the like. In detail, in the gas recovery system 100, it was assumed that the above carbon dioxide separation membrane would be used as the separation membrane included in the gas separation device 10. It was assumed that the spiral membrane element shown in FIG. 7 would be used as the gas separation device 10. It was assumed that the operation of the gas separation device 10 would employ the decompression method. It was assumed that the MOF listed as No. 22 (HKUST-1) in Table 1 would be used as the adsorbent included in the recovery portion 20. Note that HKUST-1 has an adsorption selectivity for carbon dioxide of 3.2, and it was assumed that, under adsorption conditions for a gas containing carbon dioxide, the amounts of adsorption of various components would depend on their respective partial pressures. It was assumed that the pressure in the recovery portion 20 during the adsorption operation would be adjusted to 1.0 MPa by the pressurization device 30. It was assumed that the pressure in the recovery portion 20 during the desorption operation following the adsorption operation would be adjusted to 0.1 MPa by the pressurization device 30.

For Calculation Example 1, the recovery power for carbon dioxide (MWh/t-CO₂) was calculated under the following hypothetical conditions. The calculations were performed using Symmetry, process modeling software manufactured by Schlumberger Ltd.

### <Hypothetical Conditions>

The content of carbon dioxide in the separated gas Gs (permeated gas S₁) to be supplied to the recovery portion 20 during the adsorption operation is 95 vol%.

The content of carbon dioxide in the adsorbed gas Ga to be recovered from the recovery portion 20 during the desorption operation is 95 vol% or more and 98.4 vol% or less. Note that the content of carbon dioxide in the adsorbed gas Ga is given as a value with a range, taking into account the variability depending on the filling amount of the MOF to be housed in the recovery portion 20.

### (Calculation Example 2)

A simulation was performed on the operation of a gas recovery system 103 shown in FIG. 4C, using the same carbon dioxide separation membrane as that in Calculation Example 1. The gas recovery system 103 included the gas separation device 10, the first recovery portion 201, the second recovery portion 202, the pressurization device 30, and the like. In detail, in the gas recovery system 103, it was assumed that the above carbon dioxide separation membrane would be used as the separation membrane included in the gas separation device 10. It was assumed that the spiral membrane element shown in FIG. 7 would be used as the gas separation device 10. It was assumed that the operation of the gas separation device 10 would employ the decompression method. It was assumed that the MOF listed as No. 22 (HKUST-1) in Table 1 would be used as the adsorbents included in the first recovery portion 201 and the second recovery portion 202, as in Calculation Example 1. It was assumed that the pressure in the recovery portion 20 during the adsorption operation would be adjusted to 1.0 MPa by the pressurization device 30. It was assumed that the pressure in the recovery portion 20 during the desorption operation following the adsorption operation would be adjusted to 0.1 MPa by the pressurization device 30.

For Calculation Example 2, the recovery power for carbon dioxide (MWh/t-CO₂) was calculated under the following hypothetical conditions. The calculations were performed using Symmetry, process modeling software manufactured by Schlumberger Ltd.

### <Hypothetical Conditions>

The content of carbon dioxide in the separated gas Gs (permeated gas S₁) to be supplied to the recovery portion 20 during the adsorption operation is 95 vol%.

The content of carbon dioxide in the adsorbed gas Ga to be recovered from the recovery portion 20 during the desorption operation is 95 vol% or more and 99.5 vol% or less. Note that the content of carbon dioxide in the adsorbed gas Ga is given as a value with a range, taking into account the variability depending on the filling amounts of the MOF to be housed in the first recovery portion 201 and the second recovery portion 202.

### (Calculation Example 3)

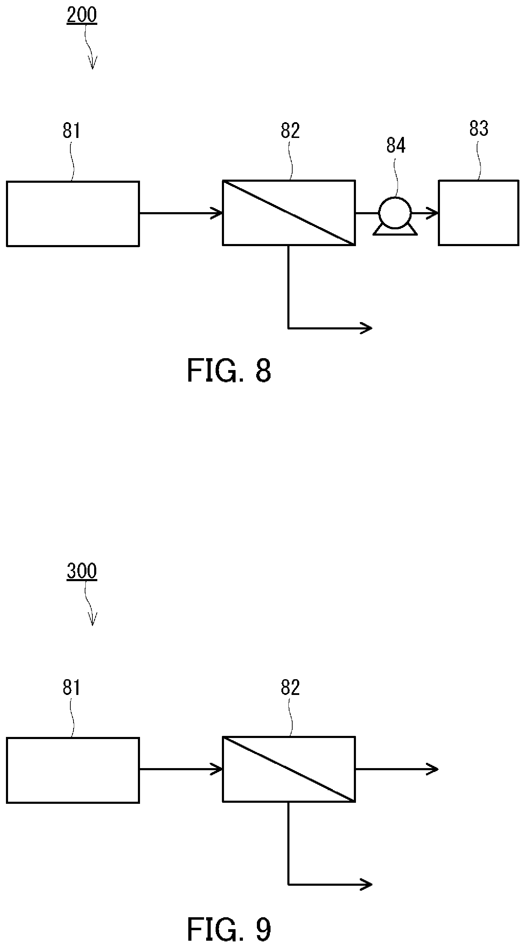

A simulation was performed on the operation of a gas recovery system 200 shown in FIG. 8, using the same carbon dioxide separation membrane as that in Calculation Example 1. The gas recovery system 200 included a combustion device 81, a gas separation device 82, a heat exchanger 83, a pressurization device 84, and the like. The gas recovery system 200 differed from the gas recovery system 100 shown in FIG. 1 in that the gas recovery system 200 included the heat exchanger 83 instead of the recovery portion 20. In detail, in the gas recovery system 200, it was assumed that the above carbon dioxide separation membrane would be used as the separation membrane included in the gas separation device 82. It was assumed that the spiral membrane element shown in FIG. 7 would be used as the gas separation device 82. It was assumed that the operation of the gas separation device 82 would employ the decompression method. It was assumed that the separated gas Gs (permeated gas S₁) would be liquefied by pressurization using the pressurization device 84 and cooling using the heat exchanger 83.

For Calculation Example 3, the recovery power for carbon dioxide (MWh/t-CO₂) was calculated under the following hypothetical conditions. The calculations were performed using Symmetry, process modeling software manufactured by Schlumberger Ltd.

### <Hypothetical Conditions>

The content of carbon dioxide in the separated gas Gs (permeated gas S₁) to be supplied during the liquefaction process is 95 vol%.

The content of carbon dioxide in the recovery liquid to be recovered from the heat exchanger 83 during the liquefaction process is 99 vol% or more.

### (Calculation Example 4)

A simulation was performed on the operation of a gas separation system 300 shown in FIG. 9, using the same carbon dioxide separation membrane as that in Calculation Example 1. The gas separation system 300 included the combustion device 81, the gas separation device 82, and the like. The gas separation system 300 differed from the gas recovery system 200 shown in FIG. 8 in that the gas separation system 300 included neither the heat exchanger 83 nor the pressurization device 84. In detail, in the gas separation system 300, it was assumed that the above carbon dioxide separation membrane would be used as the separation membrane included in the gas separation device 82. It was assumed that the spiral membrane element shown in FIG. 7 would be used as the gas separation device 82. It was assumed that the operation of the gas separation device 82 would employ the decompression method.

For Calculation Example 4, the recovery power for carbon dioxide was calculated under the following hypothetical conditions. The calculations were performed using Symmetry, process modeling software manufactured by Schlumberger Ltd.

### <Hypothetical Conditions>

The content of carbon dioxide in the separated gas Gs (permeated gas S₁) to be discharged from the gas separation device 82 is 98 vol%.

For Calculation Examples 1 to 2, the sum of the separation power of the gas separation device 10 and the compression power of the pressurization device 30 was considered as the recovery power for carbon dioxide. The separation power of the gas separation device 10 was calculated assuming cooling power, a vacuum pump (40% efficiency), and a pressurization pump (70% efficiency). For Calculation Example 3, the separation power of the gas separation device 82 and the liquefaction power of the heat exchanger 83 (the sum of the compression power and the cooling power) were considered as the recovery power for carbon dioxide. For Calculation Example 4, the separation power of the gas separation device 80 was considered as the recovery power for carbon dioxide. As the liquefaction power of the heat exchanger 83, an estimated value (> 0.25 MWh/t-CO₂) was used.

The simulation results of Calculation Examples 1 to 4 are shown in Table 3, together with the sizes of the installation areas required for each system.

**[Table 3]**

| | Calculation Example 1 | Calculation Example 2 | Calculation Example 3 | Calculation Example 4 |
|---|---|---|---|---|
| Separation power (MWh/t-CO₂) | 1.06 | 1.06 | 1.06 | 1.64 |
| Compression power (MWh/t-CO₂) | 0.06 | 0.13 | - | - |
| Liquefaction power (MWh/t-CO₂) | - | - | > 0.25 | - |
| Recovery power for CO₂ (MWh/t-CO₂) | 1.12 | 1.19 | > 1.31 | 1.64 |
| Required installation area | Small | Small | Large | Medium |

As is evident from the comparison of the simulation results between Calculation Examples 1 to 2 and Calculation Examples 3 to 4 in Table 3, operating the gas recovery system of the above embodiments would successfully reduce the recovery power for carbon dioxide. As is evident from the comparison of the simulation results between Calculation Examples 1 to 3 and Calculation Example 4, reducing the content of carbon dioxide in the separated gas to be supplied to the gas separation device to 95 vol% or less would successfully reduce the separation power of the gas separation device.

Note that the system in Calculation Example 3 included the equipment for the liquefaction process (pressurization device and heat exchanger), which resulted in a much larger installation area required for the system compared to those for the systems in Calculation Examples 1 to 2. Although omitted from Table 3, it was found that when a gas mixture containing carbon dioxide is separated by a system using the chemical absorption method (separation method in which a solvent such as an amine is used to chemically absorb carbon dioxide into an absorption liquid) rather than the membrane separation method, the installation area required for the system would be far larger compared to those for the systems in Calculation Examples 1 to 2. These results indicated that the systems in Calculation Examples 1 to 2 are also suitable for making the system compact.

### INDUSTRIAL APPLICABILITY

The gas recovery system of the present embodiment is suitable for efficiently recovering a specific gas such as carbon dioxide from a gas mixture. The gas recovery system of the present embodiment is particularly suitable for efficiently recovering carbon dioxide from exhaust gases having a content of carbon dioxide of 10 vol% or less discharged from combustion devices.

## Claims

1. A gas recovery system comprising:
a gas separation device that separates a gas mixture containing a specific gas to obtain a separated gas having a higher content of the specific gas than the gas mixture; and
a recovery portion including an adsorbent, the adsorbent being capable of adsorbing the specific gas contained in the separated gas.

2. The gas recovery system according to claim 1, wherein
the specific gas is carbon dioxide.

3. The gas recovery system according to claim 1, wherein
the gas separation device includes a separation membrane that separates the gas mixture.

4. The gas recovery system according to claim 1, wherein
the adsorbent includes a metal-organic framework.

5. The gas recovery system according to claim 4, wherein
the metal-organic framework includes, as a core, a metal ion, a metal cluster, or a metal oxide cluster, and includes a tetradentate organic ligand.

6. The gas recovery system according to claim 5, wherein
the organic ligand includes a tetracarboxylic acid.

7. The gas recovery system according to claim 6, wherein
the tetracarboxylic acid includes a nitrogen atom.

8. The gas recovery system according to claim 4, wherein
the metal-organic framework has an nbo structure.

9. The gas recovery system according to claim 4, wherein
an amount of adsorption of the specific gas on the metal-organic framework in a pressure range of 0.1 MPa to less than 1.1 MPa is greater than an amount of adsorption of the specific gas on the metal-organic framework in a pressure range of 0 MPa to less than 0.1 MPa.

10. The gas recovery system according to claim 1, wherein
the content of the specific gas in the separated gas is 95 vol% or less.

11. The gas recovery system according to claim 10, wherein
the content of the specific gas in the separated gas is 70 vol% or more.

12. The gas recovery system according to claim 1, further comprising a pressurization device that pressurizes the separated gas.

13. The gas recovery system according to claim 1, wherein
when an adsorption operation is performed in which the specific gas contained in the separated gas is adsorbed onto the adsorbent, and then a desorption operation is performed in which an adsorbed gas containing the specific gas is desorbed from the adsorbent, a content of the specific gas in the adsorbed gas is higher than the content of the specific gas in the separated gas.

14. The gas recovery system according to claim 13, wherein
the recovery portion further includes a container, a gas introduction port, and a gas discharge port, and
during the adsorption operation, a non-adsorbed gas is discharged through the gas discharge port.

15. The gas recovery system according to claim 14, further comprising a non-adsorbed gas circulation passage for feeding at least a portion of the non-adsorbed gas to the recovery portion or the gas separation device.

16. The gas recovery system according to claim 14, comprising a plurality of the recovery portions connected in series, wherein
during the desorption operation, the adsorbed gas discharged through the gas discharge port of the upstream recovery portion is supplied through the gas introduction port of the downstream recovery portion.

17. The gas recovery system according to claim 1, further comprising a combustion device that is supplied with a fuel gas containing oxygen and that discharges the gas mixture.

18. The gas recovery system according to claim 17, wherein
the combustion device includes a boiler.
